# EUROPEAN PATENT APPLICATION

(11) **EP 4 597 079 A1**
(43) Date of publication of application: **06.08.2025**
(21) Application number: 23871448.9
(22) Date of filing: 02.08.2023
(51) Int. Cl.: G01N 21/75, G01N 35/00

(54) **ANALYZING DEVICE**

(30) Priority: 26.09.2022 JP 2022152233
(71) Applicant: HITACHI HIGH-TECH CORPORATION, Tokyo 105-6409 (JP)
(72) Inventor: FUKUMURA Mami, Tokyo 100-8280 (JP); TAKAHASHI Takuya, Tokyo 105-6409 (JP); HORIKAWA Hiroshi, Tokyo 105-6409 (JP)
(74) Representative: Mewburn Ellis LLP
(86) International application number: PCT/JP2023/028239
(87) International publication number: WO 2024/070206

(57) **Abstract**

An object of the present disclosure is to provide an analyzing device that can use a light source effectively by appropriately controlling the temperature of the light source. The analyzing device according to the present disclosure includes a case internal temperature control mechanism that controls the temperature inside a light source case, a base supporting a substrate on which a light emitting element is mounted, and a base temperature control mechanism that controls the temperature of the base. The base temperature control mechanism covers the base so that the base is not exposed to the outside air (see FIG. 2).

## Description

### Technical Field

The present disclosure relates to an analyzing device for analyzing a substance to be measured in a sample by irradiating a light to the sample.

### Background Art

Some analyzing devices for analyzing the properties of a sample are of a type that irradiates a light to the sample and analyzes the reaction of the sample. This type of analyzing device includes a light source (light emitting element) that emits light. The operational characteristics of the light source may be affected by the temperature of the light source or of its surrounding environment.

Patent Literature 1 describes an absorptiometer and a semiconductor manufacturing apparatus using the absorptiometer. The literature describes an art in which "Such an absorptiometer is provided that, when measuring a high-temperature sample gas, can protect a light source unit and a light receiving unit from the heat of the sample gas without separating the light source unit from the light receiving unit by a long distance, thereby maintaining high measurement accuracy. Included are a sample container 10 including a containing space 11 for containing a sample gas, a light source unit 20 that emits a light into the containing space 11, a light receiving unit 30 that receives the light emitted from inside the containing space 11, a first heat insulator 40a disposed adjacent to the sample container 10 to be on the light source unit 20 side, a second heat insulator 40b disposed adjacent to the sample container 10 to be on the light receiving unit 30 side, a first cooler 50a disposed adjacent to the first heat insulator 40a, and a second heat insulator 50b disposed adjacent to the second heat insulator 40b." (see

ABSTRACT).

### Citation List

### Patent Literature

PTL 1: WO2018/052074

### Summary of Invention

### Technical Problem

In the absorptiometer described in Patent Literature 1, the light source unit 20, the first cooler 501, the first heat insulator 40a, and the sample container 10 are disposed as independent parts, so that there is good workability for replacing a light source. Meanwhile, the light source unit 20 is not temperature-controlled, and is partially exposed to the outside air. Since the light quantity of the light source is affected by the light source temperature, there may be such problems that (1) when the outside air temperature is low, the time it takes from powering on to the time when the light quantity of the light source becomes stable is long, because the temperature of the light source before powering on is low, and (2) when the outside air temperature is fluctuating, the temperature of the light source unit also fluctuates, which leads to fluctuation of the light quantity of the light source.

The present disclosure has been made in view of the above problems, and an object the present disclosure is to provide an analyzing device in which a light source can be used effectively by appropriately controlling the temperature of the light source.

### Solution to Problem

An analyzing device according to the present disclosure includes a case internal temperature control mechanism that controls the temperature inside a light source case, a base supporting a substrate on which a light emitting element is mounted, and a base temperature control mechanism that controls the temperature of the base. The base temperature control mechanism covers the base so that the base is not exposed to the outside air.

### Advantageous Effects of Invention

According to the analyzing device of the present disclosure, a light source can be effectively used by appropriately controlling the temperature of the light source. Other problems, configurations, effects, and the like of the present disclosure will be clear from the following description of embodiments.

### Brief Description of Drawings

[FIG. 1] FIG. 1 is an overall configuration diagram of an automatic analyzing device 100.
[FIG. 2] FIG. 2 is a cross-sectional view for explaining a configuration of a light emitting diode unit 120.
[FIG. 3] FIG. 3 is a cross-sectional view illustrating a conduit formed in a case 401 as a mechanism serving as a case internal temperature control mechanism 407, and a conduit formed in a base temperature control mechanism 418, where both the mechanisms perform temperature control with a constant temperature liquid.
[FIG. 4] FIG. 4 illustrates an operation and a heat transfer path of the light emitting diode unit 120 before lighting of light emitting diode in the configuration illustrated in FIG. 3.
[FIG. 5] FIG. 5 illustrates an operation and a heat transfer path of the light emitting diode unit 120 after lighting of light emitting diode in the configuration illustrated in FIG. 3.
[FIG. 6] FIG. 6 is a cross-sectional view for explaining a configuration of a conventional light emitting diode unit 120 with no base temperature control mechanism 418 provided.
[FIG. 7] FIG. 7 illustrates a heat transfer path after lighting of light emitting diode in the configuration illustrated in FIG. 6.
[FIG. 8A] FIG. 8A is a diagram showing a temperature distribution before lighting of light emitting diode in the configuration of FIG. 3.
[FIG. 8B] FIG. 8B is a diagram showing a temperature distribution before lighting of light emitting diode in the configuration of FIG. 6.
[FIG. 9A] FIG. 9A is a diagram showing a temperature change of a substrate 402 over time after lighting of light emitting diode.
[FIG. 9B] FIG. 9B is a diagram showing a standard deviation in 10-minute period of the fluctuating temperature of the substrate 402 illustrated in FIG. 9A.
[FIG. 10] FIG. 10 shows a change over time of the surrounding temperature of the light emitting diode unit 120.
[FIG. 11] FIG. 11 is a diagram showing a change over time of the temperature of the substrate 402 when the light emitting diode 405 is turned on under the temperature environment shown in FIG. 10.

### Description of Embodiments

### <Configuration of analyzing device>

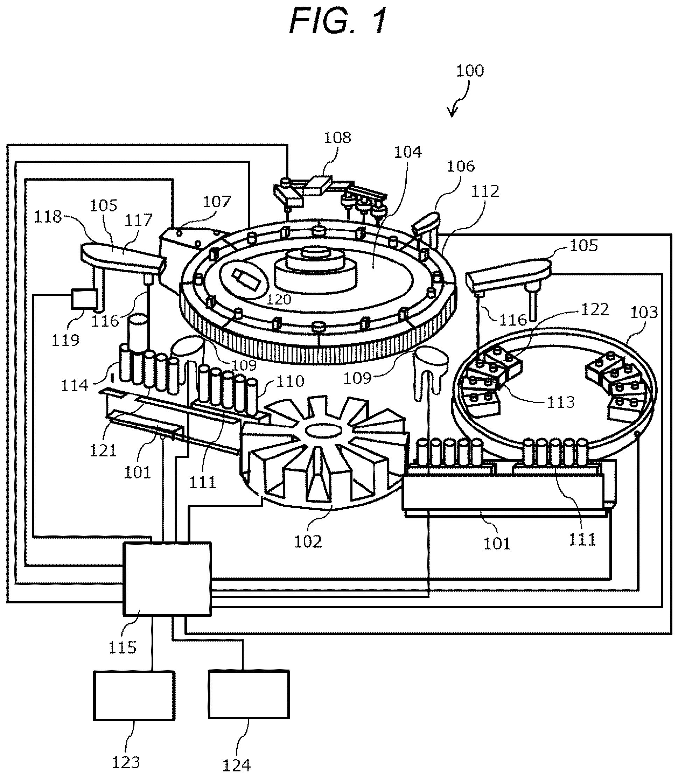

FIG. 1 is an overall configuration diagram of an automatic analyzing device 100 according to an embodiment of the present disclosure. The automatic analyzing device 100 includes a conveyance line 101, a rotor 102, a reagent disk 103, a reaction disk 104, a pipetting mechanism 105, a stirring mechanism 106, a spectroscope 107, a reaction cell washing mechanism 108, a nozzle washing mechanism 109, a controller 115, an input unit 123, and a display unit 124.

The conveyance line 101 conveys a required number of specimen racks 111 holding the specimen containers 110 each containing a specimen to a specimen pipetting position 121. At the specimen pipetting position 121, the pipetting mechanism 105 pipettes the specimen from the specimen container 110 to a reaction cell 112 (reaction container). The conveyance line 101 is connected also to the rotor 102. The rotor 102 is rotated to transfer the specimen rack 111 between the conveyance line 101 and another conveyance line 101.

The reagent disk 103 holds a reagent container 113 containing a reagent, and rotationally transfers the reagent container 113 to a position where the pipetting mechanism 105 performs pipetting. At a reagent pipetting position 122, the pipetting mechanism 105 pipettes the reagent from the reagent container 113 to the reaction cell 112. The reagent is pipetted to the reaction cell 112 by an amount necessary for colorimetric analysis, and reacts with a component in a specimen to be analyzed.

The reaction disk 104 holds the reaction cell 112, and rotationally transfers the reaction cell 112, which is a target of operations, to operation positions where operations are performed by the spectroscope 107 for colorimetric analysis, by the stirring mechanism 106, by the reaction cell washing mechanism 108, and the like. The temperature of the reaction cell 112 is maintained by a constant temperature medium such as water. This promotes a chemical reaction between a component in the specimen and the reagent, in the reaction liquid that is a mixture of the specimen and the reagent.

The pipetting mechanism 105 sucks from the specimen container 110 the specimen to be subjected to colorimetric analysis and discharges the specimen to the reaction cell 112. The pipetting mechanism 105 sucks from the reagent container 113 the reagent suitable for the analysis target and discharges the reagent to the reaction cell 112. The pipetting mechanism 105 includes an arm 118, a nozzle 116, and a pipetting mechanism motor 119. The arm 118 holds the nozzle 116 and the liquid level sensor 117. The nozzle 116 is connected to the liquid level sensor 117. The liquid level sensor 117 detects presence or absence of liquid by a capacitance change. A shield portion 114 is disposed near the position where the pipetting mechanism 105 performs a pipetting operation. The pipetting mechanism motor 119 moves the pipetting mechanism 105 in an up-down direction or a rotational direction.

The stirring mechanism 106 stirs the reaction liquid in the reaction cell 112 to promote reaction between the component to be analyzed in the specimen discharged from the specimen container 110 to the reaction cell 112 and the reagent discharged from the reagent container 113 to the reaction cell 112.

The light emitting diode unit 120 irradiates a light to the reaction liquid stirred by the stirring mechanism 106 and in which the chemical reaction has occurred. The spectroscope 107 disperses a transmitted light that has passed through the reaction liquid. Colorimetric analysis by absorbance measurement is performed based on the dispersed transmitted light.

The reaction cell washing mechanism 108 sucks the reaction liquid from the reaction cell 112 at which the colorimetric analysis has been completed, and discharges a detergent or the like to wash the reaction cell 112.

The nozzle washing mechanism 109 washes the tip of the nozzle 116 of the pipetting mechanism 105 that has pipetted the specimen or the reagent. Residues that have adhered to the nozzle 116 are thereby removed, so that the next analysis target will not be affected. The controller 115 includes a processor and a memory, and controls the mechanisms and the devices.

The input unit 123 includes a keyboard, a mouse, and a touch panel, and inputs an instruction from a user to the controller 115. The display unit 124 includes a liquid crystal display (LCD) that presents an operation screen and the like.

### <Basic configuration of light emitting diode unit>

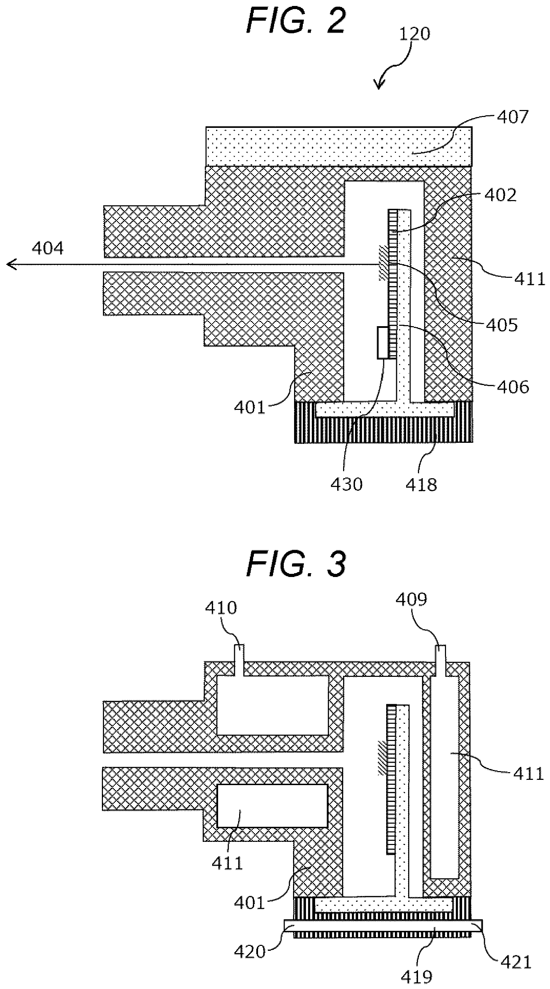

FIG. 2 is a cross-sectional view for explaining the configuration of the light emitting diode unit 120. The light emitting diode unit 120 has a structure in which a member such as the substrate 402 is accommodated in the case 401. The light emitted from the light emitting diode unit 120 is output from an opening (at a position along an arrow adjacent to the reference sign 404 in FIG. 2) of the case 401 along an optical axis 404.

The case 401 has a space (case internal space) in which the light emitting diode 405, the substrate 402, and the base 406 are disposed. The space needs to be kept at a constant temperature, even when the external temperature fluctuates, to keep the light emitting diode 405 at a constant temperature. Therefore, a time constant needs to be increased by increasing the volume of the case 401 as much as possible and using a material having a high specific heat and a low thermal conductivity. For example, a material having a higher specific heat and a lower thermal conductivity than the case internal temperature control mechanism 407 as described later is used.

A substrate 402 on which the light emitting diode 405 is mounted is disposed on the base 406, thereby contacting the substrate 402 with the base 406. The base 406 is attached in mechanical contact with the case 401 and forms a part of the outer wall of the case 401. Therefore, by adjusting the position of the base 406, the optical axis 404 of the light emitting diode 405 and the opening of the case 401 can be aligned to each other. That is, the base 406 serves as a member that supports the substrate 402 and aligns the optical axis 404. With this configuration of the case 401, the base 406, the substrate 402, and the optical axis 404, the opening of the case 401 and the optical axis 404 can be aligned to each other by adjusting the positions of the case 401 and the base 406. The base 406 is detachably attached to the case 401. Since the base 406 is detachable, the light emitting diode 405 that has broken down, for example, can be replaced by detaching the base 406, to which the light emitting diode 405 and the substrate 402 are attached, from the case 401 without detaching the case 401 from a biochemical analyzing device. When attaching the base 406 after the replacement of the light emitting diode 405, the alignment of the optical axis can be easily performed by only adjusting the base 406 and the case 401. The base 406 may be attached to the case 401 by a screw.

To replace the base 406, the base temperature control mechanism 418 is first removed from the case 401. The base temperature control mechanism 418 is therefore detached also from the base 406. Further, the base 406 is removed from the case 401. When replacing the base 406, the base temperature control mechanism 418 may not be replaced and be reused.

The temperature fluctuation of the light emitting diode unit 120 after the light emitting diode 405 being powered on will now be described. After the light emitting diode 405 being powered on, the temperature of the light emitting diode 405 rises and the heat transferred from the light emitting diode 405 raises the temperatures of the substrate 402 and the base 406. Then after a certain period of time, the temperatures of the light emitting diode 405, the substrate 402, and the base 406 reaches steady temperatures, and the light quantity and the wavelength of the light emitting diode 405 become stable. Therefore, to quickly stabilize the light quantity after the light emitting diode 405 being powered on, it is necessary to quickly stabilize the temperatures of the light emitting diode 405, the substrate 402, and the base 406. Therefore, the base 406 needs to be made as small a volume as possible, be made of a material such as a metal having a low specific heat and a high thermal conductivity (for example, aluminum), and have a small time constant.

The base temperature control mechanism 418 covers around the base 406 so that the base 406 is not exposed to the outside air, and is in contact with the base 406 to control the temperature of the base 406. The base temperature control mechanism 418 is attached so as to be detachable from the base 406 and the case 401. The case internal temperature control mechanism 407 is in contact with the case 401 to control the temperature of the case 401 so as to maintain a constant temperature in the case internal space.

At least one of the base temperature control mechanism 418 and the case internal temperature control mechanism 407 may have therein a conduit to allow a constant temperature liquid to flow through the conduit. In this case, the base temperature control mechanism 418 or the case internal temperature control mechanism 407 needs to have as large a volume as possible, and be made of a material having a high specific heat and a low thermal conductivity. The base temperature control mechanism 418 needs to be made of a material having a higher specific heat and a lower thermal conductivity than the base 406. The case internal temperature control mechanism 407 needs to be made of a material having a higher specific heat and a lower thermal conductivity than the case 401.

At least one of the base temperature control mechanism 418 and the case internal temperature control mechanism 407 may be configured to control temperature using a Peltier element. In this case, the time constant needs to be set small to change the temperature of the base temperature control mechanism 418 or the case internal temperature control mechanism 407 in conjunction with the temperature change of the Peltier element. Therefore, the base temperature control mechanism 418 or the case internal temperature control mechanism 407 needs to have as small a volume as possible, and made of a material such as a metal having a low specific heat and a high thermal conductivity (for example, aluminum). The base temperature control mechanism 418 needs to be made of a material having a specific heat equal to or lower than that of the base 406 and a thermal conductivity equal to or higher than that of the base 406. The case internal temperature control mechanism 407 should be made of a material having a specific heat equal to or lower than that of the case 401 and a thermal conductivity equal to or higher than that of the case 401.

To quickly stabilize the temperature of the light emitting diode 405, a substrate temperature control mechanism 430 may be disposed on the substrate 402 to directly control the temperature of the substrate 402. The substrate temperature control mechanism 430 may have an internal conduit therein to perform temperature control by a constant temperature liquid flowing in the conduit, or may perform temperature control using a Peltier element. The substrate temperature control mechanism 430 may not be provided when a sufficient temperature control function can be provided by the case internal temperature control mechanism 407 and the base temperature control mechanism 418. In the following description, the substrate temperature control mechanism 430 is omitted as necessary.

### <Configuration of light emitting diode unit (water-cooled)>

FIG. 3 is a cross-sectional view illustrating a conduit formed in the case 401 as a mechanism serving as the case internal temperature control mechanism 407, and a conduit formed in the base temperature control mechanism 418, where both the mechanisms perform temperature control with a constant temperature liquid.

In the case 401, the constant temperature liquid is injected from the case internal conduit inlet 409, circulates in the case internal conduit 411, and is discharged from the case internal conduit outlet 410. In the base temperature control mechanism 418, the constant temperature liquid is injected from the base temperature control mechanism conduit inlet 420, circulates in the base temperature control mechanism conduit 419, and is discharged from the base temperature control mechanism conduit outlet 421. The temperature of the constant temperature liquid is set to, for example, a temperature higher than the temperature of the air outside the light emitting diode unit 120. To reduce the temperature in this case, there is no need to additionally provide an element that can perform a cooling operation, for example, since the temperature decreases by itself by reducing the water amount which causes reduction in the heat transfer amount. This is advantageous in that the temperature can be controlled with a simple configuration. Used as the constant temperature liquid may be, for example, a constant temperature liquid used in a constant temperature bath equipped in the automatic analyzing device 100 to keep a constant temperature of a sample. Using the constant temperature liquid in such a way is useful in that supplying the constant temperature liquid to the light emitting diode unit 120 eliminates the need of the light emitting diode unit 120 having its own supply source for a constant temperature liquid. When the constant temperature liquid is shared with the automatic analyzing device 100 in this manner, the flow rate control of the constant temperature liquid may be performed by the automatic analyzing device 100. Alternatively, for example, a flow rate controlling valve may be disposed inside the light emitting diode unit 120, thereby giving a flow rate controlling function to the light emitting diode unit 120 itself.

### <Operation and heat transfer path before lighting of light emitting diode>

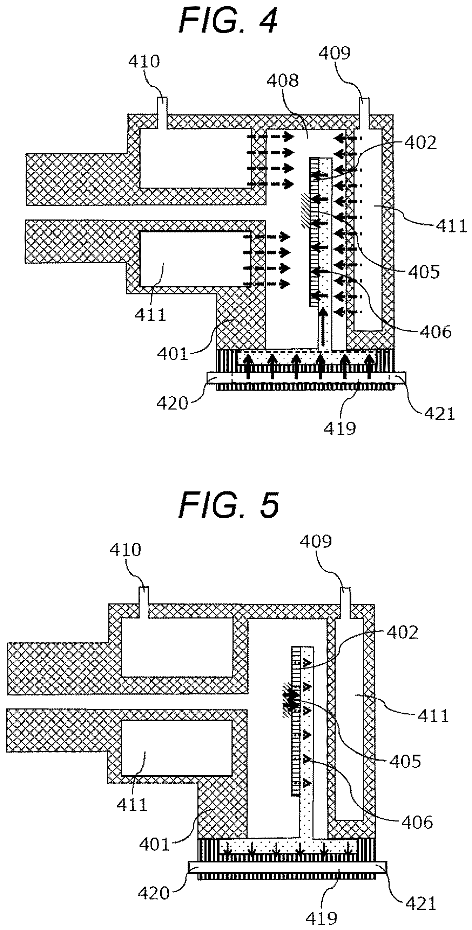

FIG. 4 illustrates an operation and a heat transfer path of the light emitting diode unit 120 before lighting of light emitting diode in the configuration illustrated in FIG. 3. In a non-measurement state such as a standby state, the light emitting diode unit 120 is not powered on. The constant temperature liquid is let flow in advance in the case internal conduit 411 and the base temperature control mechanism conduit 419. This warms the case 401 and the base temperature control mechanism 418 to about the temperature of the constant temperature liquid. The heat of the warmed case 401 is transferred (dotted arrows) to the case internal space 408, whereby the case internal space 408 is preheated. Meanwhile, the heat of the warmed base temperature control mechanism 418 is transferred to the base 406, the substrate 402, and the light emitting diode 405 via contact surfaces (black arrows), whereby the light emitting diode 405 is preheated. As described above, preheating the case internal space 408 and the light emitting diode 405 can shorten the time it takes from powering on the light emitting diode unit 120 to when the light quantity becomes stable, even under a low outside air temperature.

### <Operation and heat transfer path after lighting of light emitting diode>

FIG. 5 illustrates an operation and a heat transfer path of the light emitting diode unit 120 after lighting of light emitting diode in the configuration illustrated in FIG. 3. When the light emitting diode unit 120 is powered on, the light emitting diode 405 emits light, and the temperature of the light emitting diode 405 gradually increases over time. The heat of the light emitting diode 405 is transferred to the substrate 402 via the contact surface between the light emitting diode 405 and the substrate 402 (thick line arrows in FIG. 5). The heat of the substrate 402 is transferred to the base 406 via the contact surface between the substrate 402 and the base 406 (black dotted line arrows in FIG. 5), and the heat of the base 406 is transferred to the base temperature control mechanism 418 via the contact surface between the base 406 and the base temperature control mechanism 418 (black solid line arrows in FIG. 5). Furthermore, the heat of the base temperature control mechanism 418 is dissipated to the constant temperature liquid in the base temperature control mechanism conduit 419.

### <Conventional configuration (with no base temperature control mechanism provided)>

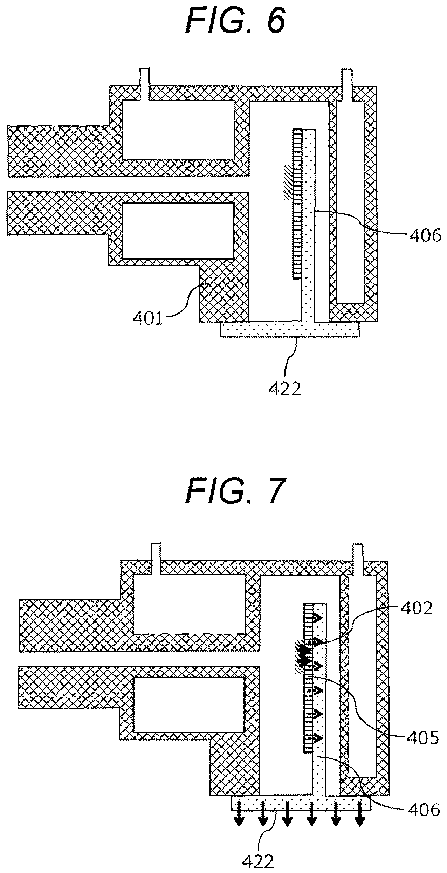

FIG. 6 is a cross-sectional view for explaining the configuration of a conventional light emitting diode unit 120 with no base temperature control mechanism 418 provided. In the configuration of FIG. 6, a part of the base 406 is in contact with the case 401, and the exposure surface 422 is exposed to the outside air.

### <Heat dissipation path of conventional configuration (with no base temperature control mechanism provided)>

FIG. 7 illustrates a heat transfer path after lighting of light emitting diode in the configuration illustrated in FIG. 6. The heat generated after the light emitting diode 405 is lit is transferred to the substrate 402 via the contact surface between the light emitting diode 405 and the substrate 402 (thick arrows in FIG. 6), and the heat of the substrate 402 is transferred to the base 406 via the contact surface between the substrate 402 and the base 406 (black dotted arrows in FIG. 6). Further, the heat of the base 406 is dissipated from the exposure surface 422 exposed to the air outside the base 406 (black solid arrows in FIG. 7).

### <Effect 1 (Start-up time shortened by preheating)>

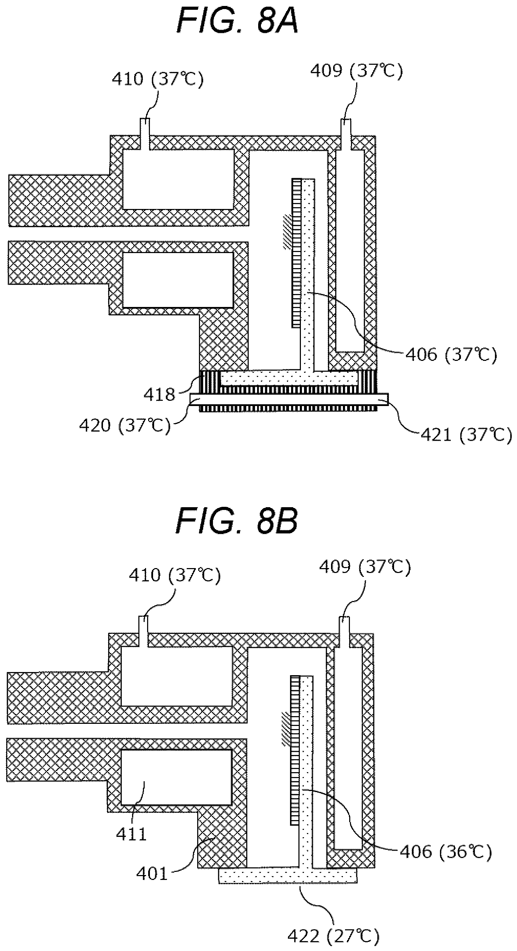

FIG. 8A is a view illustrating a temperature distribution before lighting of light emitting diode in the configuration in FIG. 3. When the base temperature control mechanism 418 is provided as illustrated in FIG. 8A, the constant temperature liquid at 37°C flows in and out from the case internal conduit inlet 409, the case internal conduit outlet 410, the base temperature control mechanism conduit inlet 420, and the base temperature control mechanism conduit outlet 421. In this case, the temperature of the base 406 is 37°C which is the same as the temperature of the constant temperature liquid.

FIG. 8B is a view illustrating the temperature distribution before lighting of light emitting diode in the configuration in FIG. 6. When there is no base temperature control mechanism 418 as illustrated in FIG. 8B, the constant temperature liquid at 37°C flows in and out from the case internal conduit inlet 409 and the case internal conduit outlet 410, but since the exposure surface 422 of the base 406 is exposed to be in contact with the outside air at 27°C, the temperature of the base 406 is 36°C. That is, when the base temperature control mechanism 418 illustrated in FIG. 8A is provided, the temperature of the base 406 can be preheated to a temperature as high as about the water temperature as compared with when no base temperature control mechanism 418 is provided as illustrated in FIG. 8B. As a result, when the base temperature control mechanism 418 is provided, the time it takes from lighting of light emitting diode to when the temperature becomes stable can be shortened as compared with when no base temperature control mechanism 418 is provided.

### <Effect 2 (Start-up time shortened by good heat dissipation performance)>

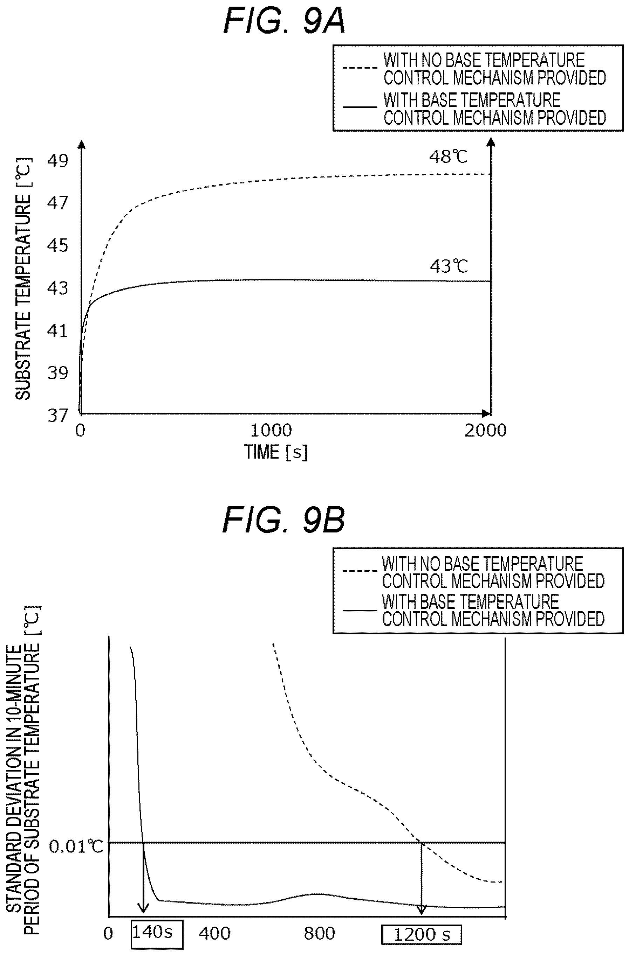

FIG. 9A is a diagram showing the temperature change of a substrate 402 over time after lighting of light emitting diode. As shown in FIG. 9A, in both cases when no base temperature control mechanism is provided (dotted line) and when the base temperature control mechanism is provided (solid line), the temperature of the substrate 402 increases over time after lighting of light emitting diode (0 seconds). After a certain lapse of time, the temperature of the substrate 402 becomes steady to be stable at 48°C when no base temperature control mechanism is provided (dotted line) and at 43°C when the base temperature control mechanism is provided (solid line). This temperature difference is considered to be an effect of heat dissipation of the base temperature control mechanism 418.

FIG. 9B is a diagram showing a standard deviation in 10-minute period of fluctuating temperature of the substrate 402 illustrated in FIG. 9A. The standard deviation in 10-minute period of the substrate temperature is an index for determining whether the temperature of the substrate 402 has quickly reached a steady temperature after lighting of light emitting diode. That is, the standard deviation in 10-minute period of the substrate temperature decreasing in a short time means that the substrate temperature has quickly reached a steady temperature. It is known that the standard deviation in 10-minute period of the substrate temperature decreases over time after powering on of light emitting diode, and that the light quantity and the wavelength of the light emitting diode have become stable when the standard deviation in 10-minute period has decreased to about 0.01°C.

As shown in FIG. 9B, the time it takes for the standard deviation in 10-minute period to decrease to about 0.01°C is about 1200 seconds when no base temperature control mechanism is provided (dotted line) and about 140 seconds when the base temperature control mechanism is provided (solid line). That is, the time is shorter when the base temperature control mechanism 418 is provided. This is considered to be the result of the temperature reaching the steady temperature quicker for a lower steady temperature.

### <Effect 3 (Temperature fluctuation decreased by controlling water temperature)>

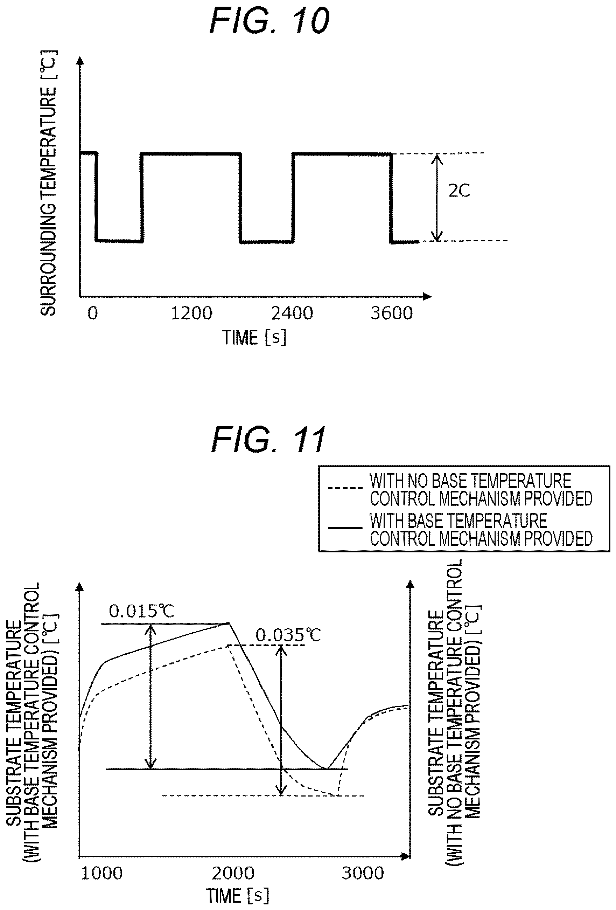

FIG. 10 shows a change over time of the temperature around the light emitting diode unit 120. As shown in FIG. 10, the surrounding temperature may fluctuate by about 2°C.

FIG. 11 is a diagram showing a change over time of the temperature of the substrate 402 when the light emitting diode 405 is lighted under the temperature environment shown in FIG. 10. When no base temperature control mechanism is provided (dotted line), the substrate temperature fluctuates in a range of 0.035°C, whereas when the base temperature control mechanism is provided (solid line), the fluctuation of the substrate temperature can be suppressed to a range of 0.015°C.

### <Summary of the present disclosure >

In the automatic analyzing device 100 according to the present disclosure, the base 406 is disposed in a constant temperature space that is temperature-controlled by the case internal temperature control mechanism 407, and the light emitting diode 405, the substrate 402, and the base 406 can be preheated by the base temperature control mechanism 418. In addition, by providing the base temperature control mechanism 418, the heat dissipation performances of the light emitting diode 405, the substrate 402, and the base 406 after the light emitting diode 405 is powered on are improved, and the temperature of the light emitting diode 405 can be lowered as compared with when no base temperature control mechanism 418 is provided. As a result, (1) the time it takes from powering on to the time when the light quantity becomes stable can be shortened. In addition, since the base 406 is temperature-controlled by the base temperature control mechanism 418 and is disposed in the constant temperature space that is temperature-controlled by the case internal temperature control mechanism 407, the base is not affected by the fluctuation of the outside air temperature. Therefore, (2) even when the outside air temperature fluctuates, the fluctuation of light emission efficiency of the light emitting diode can be suppressed.

### Reference Signs List

- 100: automatic analyzing device
- 101: conveyance line
- 102: rotor
- 103: reagent disk
- 104: reaction disk
- 105: pipetting mechanism
- 106: stirring mechanism
- 107: spectroscope
- 108: reaction cell washing mechanism
- 109: nozzle washing mechanism
- 110: specimen container
- 111: specimen rack
- 112: reaction cell
- 113: reagent container
- 114: shield portion
- 115: controller
- 116: nozzle
- 117: liquid level sensor
- 118: arm
- 119: pipetting mechanism motor
- 120: light emitting diode unit
- 121: specimen pipetting position

- 122: reagent pipetting position
- 123: input unit
- 124: display unit
- 401: case
- 402: substrate
- 404: optical axis
- 405: light emitting diode
- 406: base
- 407: case internal temperature control mechanism
- 408: case internal space
- 409: case internal conduit inlet
- 410: case internal conduit outlet
- 411: case internal conduit
- 418: base temperature control mechanism
- 419: base temperature control mechanism conduit
- 420: base temperature control mechanism conduit inlet
- 421: base temperature control mechanism conduit outlet
- 422: exposure surface
- 430: substrate temperature control mechanism

## Claims

1. An analyzing device that analyzes a substance to be measured in a sample by irradiating a light to the sample, the analyzing device comprising:
a light emitting element that emits the light;
a substrate on which the light emitting element is mounted;
a base that supports the substrate;
a case that accommodates the light emitting element and the substrate;
a case internal temperature control mechanism that controls temperature inside the case; and
a base temperature control mechanism that adjusts temperature of the base, wherein
the base temperature control mechanism covers the base so that the base is not exposed to the outside air, and
the base temperature control mechanism is in contact with the base to directly control the temperature of the base.

2. The analyzing device according to claim 1, wherein
the base is configured to be detachable from the case.

3. The analyzing device according to claim 1, wherein
the case has a case internal space that accommodates the light emitting element and the substrate, and
the light emitting element and the substrate are sealed in the case internal space by the base and the case.

4. The analyzing device according to claim 1, wherein
the case has a first specific heat and a first thermal conductivity, and
the case internal temperature control mechanism has a second specific heat lower than the first specific heat and a second thermal conductivity higher than the first thermal conductivity.

5. The analyzing device according to claim 1, wherein
the base temperature control mechanism is configured to be detachable from the base and also detachable from the case.

6. The analyzing device according to claim 1, wherein
the base temperature control mechanism is detachably attached to the case to cover the base so that the base is not exposed to the outside air.

7. The analyzing device according to claim 1, wherein
the base temperature control mechanism is configured to cover the base when the base temperature control mechanism is attached to the case, and
the base temperature control mechanism is configured that, when detached from the case, the base temperature control mechanism is detached also from the base.

8. The analyzing device according to claim 1, wherein
the base temperature control mechanism has inside a conduit in which a constant temperature liquid used for temperature control flows,
the base has a third specific heat and a third thermal conductivity, and
the base temperature control mechanism has a fourth specific heat higher than the third specific heat and a fourth thermal conductivity lower than the third thermal conductivity.

9. The analyzing device according to claim 1, wherein
the case internal temperature control mechanism has inside a conduit in which a constant temperature liquid used for temperature control flows,
the case has a fifth specific heat and a fifth thermal conductivity, and
the case internal temperature control mechanism has a sixth specific heat higher than the fifth specific heat and a sixth thermal conductivity lower than the fifth thermal conductivity.

10. The analyzing device according to claim 1, wherein
the base temperature control mechanism is configured to perform temperature control using a Peltier element, and the base has a seventh specific heat and a seventh thermal conductivity, and
the base temperature control mechanism has an eighth specific heat equal to or lower than the seventh specific heat and an eighth thermal conductivity equal to or higher than the seventh thermal conductivity.

11. The analyzing device according to claim 1, wherein
the case internal temperature control mechanism is configured to perform temperature control using a Peltier element,
the case has a ninth specific heat and a ninth thermal conductivity, and
the case internal temperature control mechanism has a tenth specific heat equal to or lower than the ninth specific heat and a tenth thermal conductivity equal to or higher than the ninth thermal conductivity.

12. The analyzing device according to claim 1, further comprising
a substrate temperature control mechanism that controls temperature of the substrate.

13. The analyzing device according to claim 12, wherein
the substrate temperature control mechanism is configured to at least
include a conduit in which a constant temperature liquid used for temperature control flows, or
perform temperature control by a Peltier element.

14. The analyzing device according to claim 1, wherein
at least one of the case internal temperature control mechanism and the base temperature control mechanism preheats the light emitting element in a time period in which the light emitting element is not emitting light.

15. The analyzing device according to claim 1, wherein
the substrate, the base, and the base temperature control mechanism are configured to dissipate, via the substrate, the base, and the base temperature control mechanism, heat generated by the light emitting element emitting light.
